# EUROPEAN PATENT APPLICATION

(11) **EP 4 621 951 A1**
(43) Date of publication of application: **24.09.2025**
(21) Application number: 24216420.0
(22) Date of filing: 29.11.2024
(51) Int. Cl.: H01M 50/204, H01M 50/244, H01M 50/289, H01M 50/367, H01M 50/291, H01M 50/249

(54) **BATTERY AND BATTERY PACK**

(30) Priority: 22.03.2024 CN 202420573739 U; 23.07.2024 WO PCT/CN2024/106963
(71) Applicant: Eve Energy Co., Ltd., Huizhou, Guangdong 516006 (CN)
(72) Inventor: YANG, Peng, Huizhou, Guangdong, 516006 (CN); ZHANG, Shaofei, Huizhou, Guangdong, 516006 (CN)
(74) Representative: Berggren Oy

(57) **Abstract**

This application provides a battery box and a battery pack, and relates to the technical field of batteries. The battery box includes a box cover (111), a box (112), a diaphragm (1131) and two longitudinal beams (114). The box cover (111) covers and closes the box (112) to define a mounting cavity. The mounting cavity has two first side walls disposed oppositely. The two longitudinal beams (114) are disposed on the two first side walls, respectively. Both ends of the diaphragm (1131) are lapped with the two longitudinal beams (114), respectively. The diaphragm (1131) divides the mounting cavity into a lower module mounting cavity (1123) and an upper module mounting cavity (1124). A side of each of the two longitudinal beams (114) close to the box cover (111) is configured to abut against the upper battery module (012).

## Description

### TECHNICAL FILED

The present disclosure relates to the technical field of batteries, in particular to a battery box and a battery pack.

### BACKGROUND

With the mass production of large cylindrical cells in domestic and foreign markets, the design of battery systems based on large cylindrical cells has become an important application scheme of battery systems for new energy vehicles. Battery systems are mainly divided into single-layer battery systems and double-layer battery systems according to the number of layers of battery modules arranged in the Z direction. Since the Z-direction size of the space used for mounting the battery pack of the new energy vehicle is large, and a double-layer battery system may make full use of the Z-direction space of the new energy vehicle, double-layer battery systems are widely used in new energy vehicles.

### SUMMARY

In the design of the double-layer battery system, a bracket supporting the upper battery module is an integrated structure. The bracket not only needs to be provided with a structure that matches the upper battery module and a structure that is connected to the box, but also needs to be provided with holes for pressure relief of the battery module inside the bracket. As a result, it is difficult to form the bracket, resulting in low manufacturing efficiency of the battery box.

The embodiments of the present disclosure provide a battery box and a battery pack, which may improve the problem of low manufacturing efficiency of the battery box.

In a first aspect, the embodiments of the present disclosure provide a battery box. The battery box includes a box cover, a box, a diaphragm, and two longitudinal beams. The box cover is configured to cover and close the box to define a mounting cavity. The mounting cavity includes two first side walls disposed oppositely. The two longitudinal beams are disposed on the two first side walls, respectively. Both ends of the diaphragm are lapped with the two longitudinal beams, respectively. The diaphragm divides the mounting cavity into a lower module mounting cavity and an upper module mounting cavity. A surface of each of the two longitudinal beams close to the box cover is a first side surface, and the first side surface is configured to abut against the upper battery module.

In a second aspect, the embodiments of the present disclosure provide a battery pack. The battery pack includes an upper battery module, a lower battery module, and the aforementioned battery box. The upper battery module is disposed in the upper module mounting cavity. The lower battery module is disposed in the lower module mounting cavity.

In the present disclosure, by providing the longitudinal beams and the diaphragm as a bracket for supporting the upper battery module, the support of the upper battery module and the isolation of the upper module mounting cavity and the lower module mounting cavity may be realized to reduce the thermal interference of the upper and lower battery modules. The bracket composed of the longitudinal beams and the diaphragm has a discrete structure, so that the longitudinal beams and the diaphragm may be manufactured separately, thereby reducing the molding difficulty of the longitudinal beams and the diaphragm, and further improving the manufacturing efficiency of the battery box.

### BRIEF DESCRIPTION OF THE DRAWINGS

FIG. 1 is a schematic structural view of a battery box provided by some embodiments of the present disclosure.
FIG. 2 is a top view of a box provided by some embodiments of the present disclosure.
FIG. 3 is a cross-sectional view taken along a line A-A in FIG. 2.
FIG. 4 is an enlarged view at D in FIG. 3.
FIG. 5 is an enlarged view at B in FIG. 3.
FIG. 6 is a schematic view of a cross beam provided by some embodiments of the present disclosure.
FIG. 7 is an enlarged view at C in FIG. 6.
FIG. 8 is a schematic structural view of a battery pack provided by some embodiments of the present disclosure.

### Reference numerals:

001, battery pack;
011, battery box;
111, box cover;
112, box; 1121, bottom guard; 1122, side plate; 11221, upper pressure relief valve mounting hole; 11222, lower pressure relief valve mounting hole; 1123, lower module mounting cavity; 1124, upper module mounting cavity; 1125, first support beam;
1126, second support beam; 11261, third through hole; 11262, fourth through hole; 11263, lower pressure relief channel;
1131, diaphragm; 1132, thermal insulation layer;
114, longitudinal beam; 1141, first side surface; 1142 step groove; 11421, first groove wall; 11422, second groove wall; 1143, upper pressure relief channel; 1144, first through hole; 1145, second through hole; 1146, longitudinal beam bracket; 1147, bolt;
115, support strip;
116, cross beam; 117, stiffening beam; 118, intermediate beam; 119, gasket;
012, upper battery module.

### DETAILED DESCRIPTION

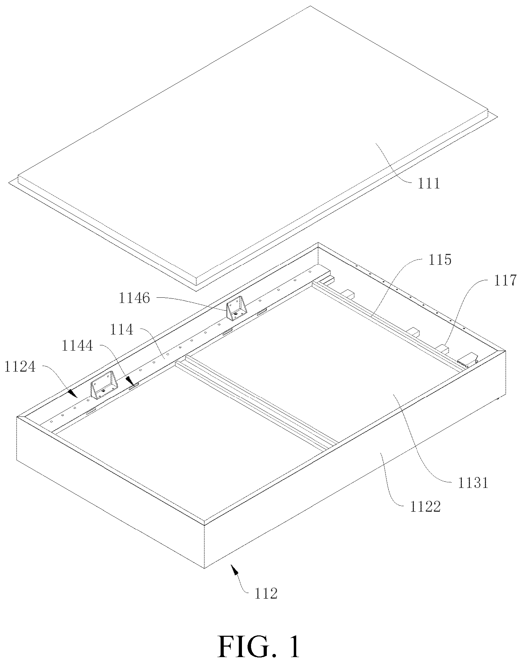

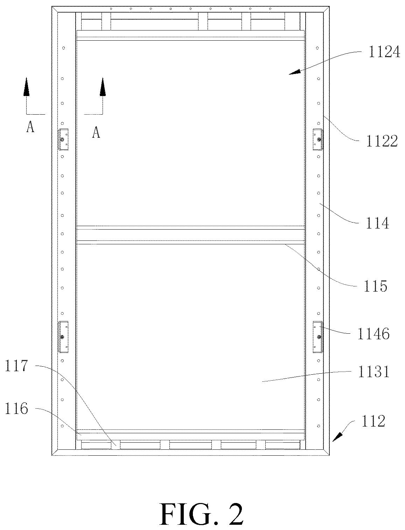

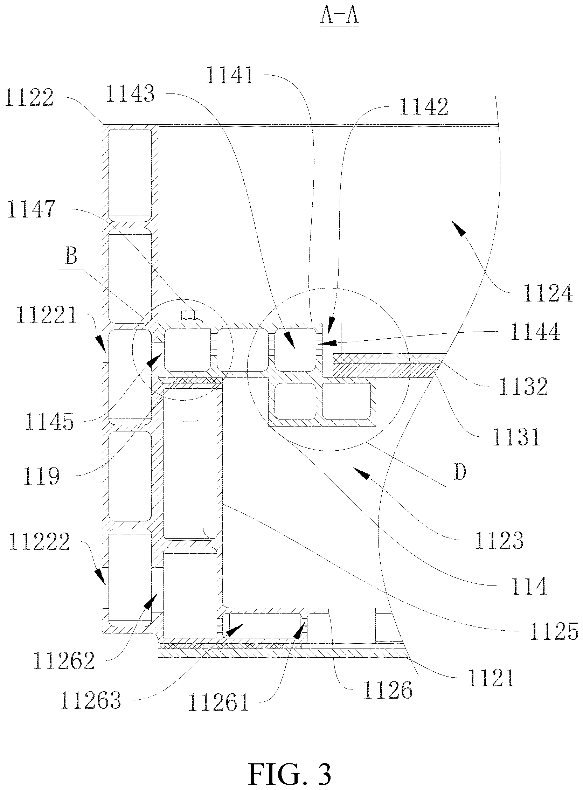

Referring to FIGS. 1 to 3, FIG. 1 is a schematic structural view of a battery box 011 provided by some embodiments of the present disclosure, FIG. 2 is a top view of a box provided by some embodiments of the present disclosure, and FIG. 3 is a cross-sectional view taken along a line A-A in FIG. 2. The embodiments of the present disclosure provide a battery box 011. The box 011 includes a box cover 111, a box 112, a diaphragm 1131, and two longitudinal beams 114. The box cover 111 covers and closes the box 112 to define a mounting cavity. The mounting cavity has two first side walls disposed oppositely. The two longitudinal beams 114 are provided on the two first side walls, respectively. Both ends of the diaphragm 1131 are lapped with the two longitudinal beams 114, respectively. The diaphragm 1131 divides the mounting cavity into a lower module mounting cavity 1123 and an upper module mounting cavity 1124. A surface of the longitudinal beam 114 close to the box cover 111 is a first side surface 1141. The first side surface 1141 is configured to abut against an upper battery module.

It can be understood that the box 112 includes a bottom guard 1121 and four side plates 1122. The four side plates 1122 are sequentially connected end to end as a frame structure. The bottom guard 1121 is disposed on one side of the frame structure to cover one side of the inner cavity of the frame structure. The other side of the enclosure structure is closed and covered by the box cover 111.

The diaphragm 1131 may be fixed to the longitudinal beams 114 by glue, or may be welded to the longitudinal beams 114, or may be fixed to the longitudinal beams 114 by filling glue into the mounting cavity after the battery pack is assembled. The longitudinal beams 114 may be integrally formed with the side walls of the box 112 by an aluminum extrusion process, or may be fixed to the first side walls by screws or welding.

In addition, the upper module mounting cavity 1124 is used for mounting the upper battery module. In order to facilitate pressure relief, explosion-proof valves of cells of the upper battery module are provided at intervals from the diaphragm 1131 to form a buffer space between the explosion-proof valves and the diaphragm 1131 for braking the explosion-proof valves. Accordingly, the lower module mounting cavity 1123 is used for mounting the lower battery module. In order to facilitate pressure relief, explosion-proof valves of cells of the lower battery module are provided at intervals from the bottom guard 1121 of the battery box 011 to form a buffer space between the explosion-proof valves and the bottom guard 1121 for braking of the explosion-proof valves.

In some embodiments, the diaphragm 1131 is a steel plate, and the longitudinal beam 114 is an extruded aluminum piece.

In the embodiments, by providing the longitudinal beams 114 and the diaphragm 1131 as a bracket for supporting the upper battery module, the support of the upper battery module and the isolation of the upper module mounting cavity 1124 and the lower module mounting cavity 1123 may be realized to reduce the thermal interference of the upper and lower battery modules. The bracket composed of the longitudinal beams 114 and the diaphragm 1131 has a discrete structure, so that the longitudinal beams and the diaphragm may be manufactured separately, thereby reducing the molding difficulty of the longitudinal beams and the diaphragm, and further improving the manufacturing efficiency of the battery box 011.

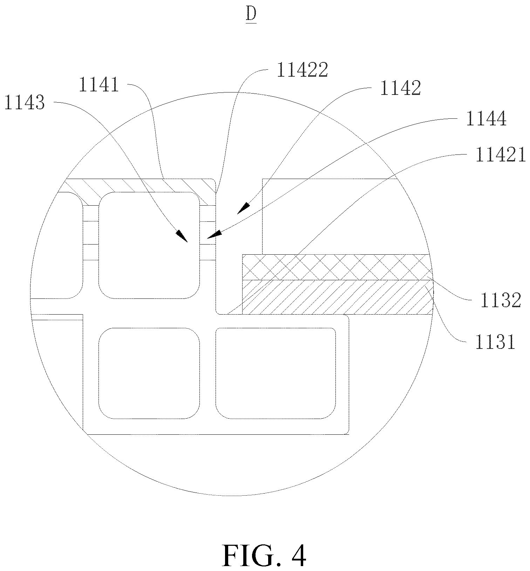

Referring to FIGS. 3 and 4, FIG. 4 is an enlarged view at D in FIG. 3. In some embodiments, a side of the longitudinal beam 114 facing away from the first side wall on which the longitudinal beam 114 is located is provided with a step groove 1142. The step groove 1142 has a first groove wall 11421 parallel to the box cover 111. Both ends of the diaphragm 1131 are lapped with the first groove walls 11421 of the two longitudinal beams 114, respectively.

In the embodiments, by providing the step groove 1142 on the longitudinal beam 114, on the one hand, the first groove wall 11421 supports the diaphragm 1131, so that the upper battery module located on the first side surface 1141 may be arranged at intervals from the diaphragm 1131 to form a gap between the upper battery module and the diaphragm 1131, and a buffer space for braking the explosion-proof valves may be formed between the explosion-proof valves and the diaphragm 1131 to improve the reliability of the battery pack. On the other hand, the structure supporting the upper battery module and the diaphragm 1131 is integrated on the longitudinal beam 114, so that the first groove wall 11421 and the first side surface 1141 may be formed respectively based on the same processing criterion. It is convenient to control the buffer space for braking the explosion-proof valves of the upper battery module by processing, and the difficulty of assembly may be reduced.

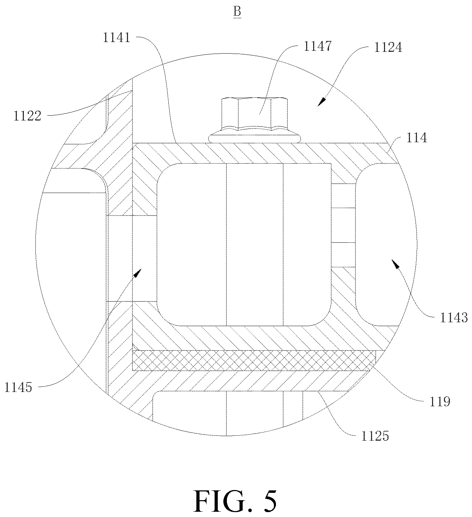

Referring to FIG. 4, in some embodiments, the step groove 1142 further has a second groove wall 11422 provided at an included angle with the first groove wall 11421. An upper pressure relief channel 1143 is provided inside the longitudinal beam 114, and the second groove wall 11422 is provided with a first through hole 1144. Referring to FIGS. 3 and 5, FIG. 5 is an enlarged view at B in FIG. 3. A second through hole 1145 is provided on a side of the longitudinal beam 114 close to the first side wall where the longitudinal beam 114 is located. The first through hole 1144 and the second through hole 1145 are respectively in communication with the upper pressure relief channel 1143. The side plate 1122 of the box 112 is provided with an upper pressure relief valve mounting hole 11221. The upper pressure relief valve mounting hole 11221 is in communication with the second through hole 1145.

In some embodiments, a plurality of the first through holes 1144 are defined by the second groove wall 11422 along an axis of the longitudinal beam 114.

In the embodiments, by providing the upper pressure relief channel 1143, when a large amount of gas is generated caused by thermal runaway of the upper battery module, the gas may sequentially flow from the gap between the upper battery module and the diaphragm 1131, the first through hole 1144, the upper pressure relief channel 1143, and the second through hole 1145 to the upper pressure relief valve, so that the gas generated by the battery module is discharged from the battery pack by braking the upper pressure relief valve, and the safety of the battery pack may be improved.

Referring to FIG. 1, in some embodiments, a support strip 115 is provided on a side of the diaphragm 1131 close to the box cover 111. An axis of the support strip 115 is parallel to the diaphragm 1131. A side of the support strip 115 close to the box cover 111 is configured to abut against the upper battery module. A surface of the support strip 115 close to the box cover 111 is coplanar with the first side surface 1141. The side surface of the support strip 115 close to the box cover 111 is the top surface of the support strip 115.

Optionally, the axis of the support strip 115 is perpendicular to the axis of the longitudinal beam 114.

Specifically, along the axis of the longitudinal beam 114, both ends of the battery module is provided with a support strip 115. In this way, the side wall of the support strip 115 facing the gap between the diaphragm 1131 and the upper battery module, the second groove wall 11422, a plastic bracket of the upper battery module, and the diaphragm 1131 surround the upper pressure relief cavity. The upper pressure relief cavity is exhaust relief only through the first through hole 1144.

It can be understood that when only the longitudinal beam 114 supports the upper battery module, a support surface for the upper battery module is relatively small, resulting in poor positional stability of the upper battery module.

Based on this, in the embodiments, by providing the support strip 115 to support the upper battery module, the support surface of the battery box 011 for the upper battery module may be increased, and the positional stability of the upper battery module may be improved.

Further, the support strip 115 has elasticity. Specifically, the support strip 115 may optionally be foam. In this way, by compressing the support strip 115, the top surface of the support strip 115 may be coplanar with the first side surface 1141, so that the flatness requirement for the support strip 115 and the dimensional requirement that the top surface of the support strip 115 needs to be coplanar with the first side surface 1141 may be reduced, thereby reducing manufacturing difficulty.

Referring to FIG. 3, in some embodiments, the first side wall is convexly provided with a first support beam 1125. The first support beam 1125 abuts against the longitudinal beam 114 close to the first end of the box cover 111.

It can be understood that the first support beam 1125 is integrally formed with the side wall of the battery box 011, specifically integrally formed by aluminum extrusion.

In addition, the longitudinal beam 114 is locked to the first support beam 1125 by bolts 1147. The first support beam 1125 extends in the axial direction of the longitudinal beam 114, and the length of the first support beam 1125 coincides with the length of the longitudinal beam 114.

In the embodiments, the first support beam 1125 is convexly provided on the first side wall, so that the longitudinal beam 114 is supported by the first support beam 1125, and the positional stability of the longitudinal beam 114 may be improved.

In some embodiments, the battery box 011 further includes a gasket 119. The gasket 119 is disposed between the first support beam 1125 and the longitudinal beam 114.

It can be understood that there is a gap between the longitudinal beam 114 and the first side wall, and a gap between the longitudinal beam 114 and the first support beam 1125, thereby allowing hot gas to easily flow through the gaps, thereby avoiding thermal interference between the lower battery module and the upper battery module. When filling glue, glue fills the lower module mounting cavity 1123 and the upper module mounting cavity 1124, respectively. The gap is filled by the glue filed in the lower module mounting cavity 1123 only after the glue is filed into the bottom of the longitudinal beam 114. Because the gap is small, a large pressure is needed to fill the glue, resulting in the gap not being filled by the glue.

Based on this, in the embodiments, by providing the gasket 119 between the first support beam 1125 and the longitudinal beam 114, the isolation between the lower module mounting cavity 1123 and the upper module mounting cavity 1124 may be improved, and thermal interference between the lower battery module and the upper battery module may be improved.

Further, when the longitudinal member 114 is fixed to the first support beam 1125 by the bolt 1147, an end of a rod portion of the bolt 1147 is screwed to the first support beam 1125 after penetrating the longitudinal member 114 and the gasket 119 in turn. In this way, the longitudinal beam 114 may not only be fixed to the first support beam 1125, but also the gasket 119 may be clamped between the longitudinal beam 114 and the first support beam 1125 by the locking force of the bolt 1147, thereby improving the sealing between the first support beam 1125 and the longitudinal beam 114.

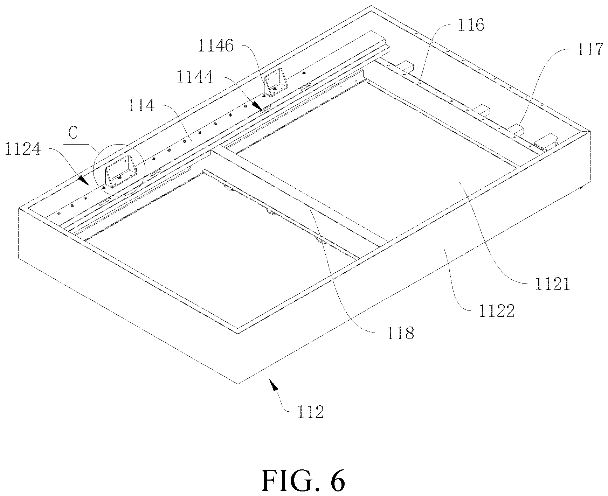

Referring to FIG. 6, FIG. 6 is a schematic view of a cross beam 116 provided by some embodiments of the present disclosure. In some embodiments, the mounting cavity further has two second side walls disposed oppositely. The two first side walls, the two second side walls and the surface of the box cover 111 facing the box 112 define the mounting cavity. The battery box 011 further includes two beams 116. The two cross beams 116 are provided on the two second side walls, respectively. The other ends of the diaphragm 1131 are lapped with the two cross beams 116, respectively.

It can be understood that along the periphery of the box cover 111, the two first side walls and the two second side walls are sequentially staggered. The first side wall is vertically connected to the second side wall, specifically, both ends of one first side wall are connected to ends of the two second side walls, respectively, and both ends of the other first side wall are connected to the other ends of the two second side walls, respectively.

In some embodiments, both ends of the longitudinal beam 114 abut against the second side wall of the mounting cavity, respectively. Both ends of the cross beam 116 are plugged into the two longitudinal beams 114, respectively.

Further, each cross member 116 is extruded aluminum.

In the embodiments, by providing the cross beam 116, the supporting stability of the battery box 011 to the diaphragm 1131 may be improved, thereby the supporting stability of the battery box 011 to the upper battery module may be improved, and the reliability of the battery pack may be improved.

Referring to FIG. 6, in some embodiments, the battery box 011 further includes a stiffening beam 117 disposed between each cross beam 116 and a second side wall on which the cross beam 116 is located. Both ends of the stiffening beam 117 are connected to the cross beam 116 and the second side wall adjacent thereto, respectively.

In some embodiments, the stiffening beam 117 is parallel to the axis of the longitudinal beam 114, and the stiffening beam 117 is welded to the cross beam 116 and the second side wall adjacent thereto.

Further, a plurality of stiffening beams 117 are provided between the cross member 116 and the second side wall adjacent to the cross member 116. The plurality of stiffening beams 117 are disposed at intervals along the axis of the cross beam 116.

In the embodiments, by providing the stiffening beam 117, the strength of the battery box 011 may be improved, thereby improving the structural reliability of the battery box 011, and further improving the impact resistance of the battery box 011.

In some embodiments, the battery box 011 further includes an intermediate beam 118, the axis of the intermediate beam 118 is parallel to the axis of the cross beam 116 and is located between the two cross beams 116. Both ends of the intermediate beam 118 are connected to the first side wall, respectively.

In some embodiments, the intermediate beam 118 is parallel to the axis of the cross beam 116 and connected to a central portion of the longitudinal beam 114. Specifically, the intermediate beam 118 is welded to the longitudinal beam 114.

In the embodiments, by providing the middle beam 118, the strength of the battery box 011 may be improved, thereby improving the structural reliability of the battery box 011, and further improving the impact resistance of the battery box 011.

Referring to FIG. 3, in some embodiments, a second support beam 1126 is provided on a side of the first side wall close to the bottom guard 1121 of the box 112. A side of the second support beam 1126 close to the box cover 111 is configured to abut against the lower battery module. In this way, a gap may be made between the lower battery module and the bottom guard 1121, and a buffer space for braking the explosion-proof valves may be formed between the explosion-proof valves and the bottom guard 1121, thereby improving the reliability of the battery pack.

In some embodiments, the second support beam 1126 and the side plate 1122 of the box 112 are formed by aluminum extrusion.

In some embodiments, the second support beam 1126 is provided to support the lower battery module, so that the position of the lower battery module relative to the height of the battery box 011 is determined, thereby improving the positional stability of the lower battery module.

It can be understood that the side wall of the second support beam 1126 facing the gap between the lower battery module and the bottom guard 1121, the side wall of the cross beam 116 facing the gap between the lower battery module and the bottom guard 1121, the bottom guard 1121, and a plastic bracket of the lower battery module surround the lower pressure relief cavity. The lower pressure relief cavity is exhaust relief only through the third through hole 11261.

Referring to FIG. 3, in some embodiments, a lower pressure relief channel 11263 is provided inside the second support beam 1126. A third through hole 11261 is provided on a side of the second support beam 1126 facing away from the first side wall to which the second support beam 1126 is connected. A fourth through hole 11262 is provided on a side of the second support beam 1126 close to the first side wall where the second support beam 1126 is located. The third through hole 11261 and the fourth through hole 11262 are in communication with the lower pressure relief channel 11263, respectively. The side plate 1122 of the box 112 is provided with a lower pressure relief valve mounting hole 11222 in communication with the fourth through hole 11262.

In some embodiments, the second support beam 1126 is provided with a plurality of third through holes 11261 along the axis of the second support beam 1126.

In some embodiments, by providing the lower pressure relief channel 11263, when a large amount of gas is generated caused by thermal runaway of the lower battery module, the gas may sequentially flow from the gap between the lower battery module and the bottom guard 1121, the third through hole 11261, the lower pressure relief channel 11263, and the fourth through hole 11262 to the lower pressure relief valve, so that the gas generated by the battery module is discharged from the battery pack by braking the lower pressure relief valve, and the safety of the battery pack may be improved.

In addition, the pressure relief paths of the lower module mounting cavity 1123 and the upper module mounting cavity 1124 are independent of each other, so that the pressure relief of the lower module mounting cavity 1123 and the upper module mounting cavity 1124 does not interfere with each other, thereby improving the structural safety, thermal safety and reliability of the battery pack.

In some embodiments, a thermal insulation layer 1132 is provided on a side of the diaphragm 1131.

It can be understood that the thermal insulation layer 1132 may be, but is not limited to, a mica sheet.

In addition, the thermal insulation layer 1132 may be provided on a side of the diaphragm 1131 facing the upper battery module, the thermal insulation layer 1132 may be provided on a side of the diaphragm 1131 facing the lower battery module, or the heat insulating layers 1132 may be provided on both sides of the the diaphragm 1131.

In some embodiments, a thickness of the heat insulation layer 1132 ranges from 1 mm to 3 mm. Specifically, the thickness of the heat insulation layer 1132 may be, but is not limited to, 1 mm, 1.33 mm, 1.6 mm, 1.9 mm, 2 mm, 2.25 mm, 2.8 mm, or 3 mm.

In the embodiments, by providing the heat insulation layer 1132, the heat transfer speed between the lower module mounting cavity 1123 and the upper module mounting cavity 1124 may be reduced, thereby reducing the thermal interference between the lower module mounting cavity 1123 and the upper module mounting cavity 1124, and further improving the reliability of the battery pack.

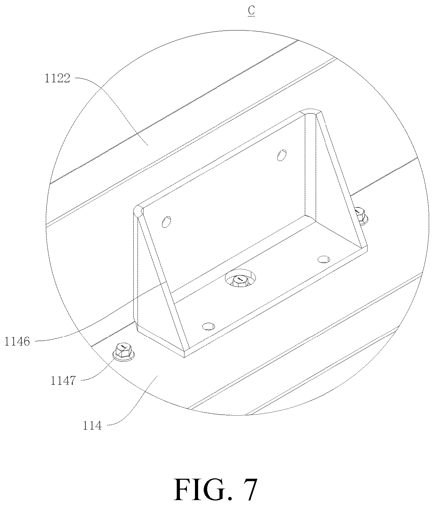

Referring to FIG. 7, FIG. 7 is an enlarged view at C in FIG. 6. In some embodiments, a longitudinal beam bracket is provided on a side of the longitudinal beam 114 close to the box cover 111. One side of the longitudinal beam bracket is connected to the longitudinal beam 114, and the other side is connected to the first side wall.

In some embodiments, the longitudinal beam bracket is connected to the longitudinal beam 114 and the first side wall, respectively, by bolts 1147.

In the embodiments, by providing the bracket of the longitudinal beam, the positional stability of the longitudinal beam 114 may be improved, thereby improving the supporting stability of the upper battery module and the steel plate by the longitudinal beam 114, and thus improving the reliability of the battery pack.

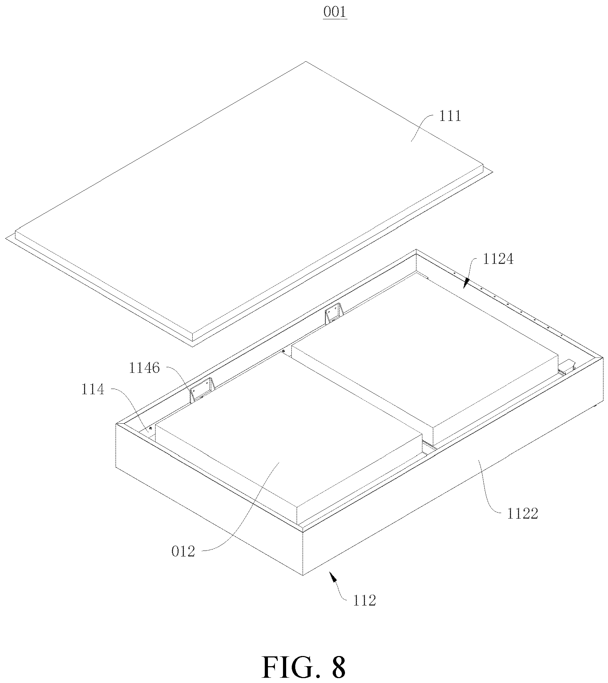

Referring to FIG. 8, FIG. 8 is a schematic structural view of a battery pack 001 provided by some embodiments of the present disclosure. Embodiments of the present disclosure provide a battery pack 001. The battery pack 001 includes an upper battery module 012, a lower battery module, and a battery box 011. The upper battery module is disposed in the upper module mounting cavity 1124. The lower battery module is disposed in the lower module mounting cavity 1123.

The diaphragm 1131 is fixedly connected to the lower battery module by a structural adhesive, and the heat insulation layer 1132 is bonded to the diaphragm 1131.

In addition, both the upper module mounting cavity 1124 and the lower module mounting cavity 1123 are filled with a polyurethane foam sealing agent.

In some embodiments, cells of the battery module may be, but are not limited to, 4680 cylindrical cells.

In the embodiments, by providing the battery box 011, a bracket composed of the longitudinal beams 114 and the diaphragm 1131 may be made into a discrete structure, so that the longitudinal beams 114 and the diaphragm 1131 may be manufactured separately, thereby reducing the molding difficulty thereof, and further improving the manufacturing efficiency of the battery pack 001.

## Claims

1. A battery box, **characterized in that** the battery box comprises:
a box (112);
a box cover (111) configured to cover and close the box (112) to define a mounting cavity comprising two first side walls disposed oppositely;
two longitudinal beams (114) disposed on the two first side walls, respectively; and
a diaphragm (1131), wherein both ends of the diaphragm (1131) are lapped with the two longitudinal beams (114), respectively;
wherein the diaphragm (1131) divides the mounting cavity into a lower module mounting cavity (1123) and an upper module mounting cavity (1124), each of the two longitudinal beams (114) comprises a first side surface (1141) close to the box cover (111), and the first side surface (1141) is configured to abut against an upper battery module (012).

2. The battery box of claim 1, **characterized in that** a side of each of the two longitudinal beams (114) facing away from corresponding one of the two first side walls is provided with a step groove (1142), the step groove (1142) comprises a first groove wall (11421) parallel to the box cover (111), and the both ends of the diaphragm (1131) are lapped with two first groove walls (11421) of the two longitudinal beams (114), respectively.

3. The battery box of claim 2, **characterized in that** the step groove (1142) further comprises a second groove wall (11422) provided at an included angle with the first groove wall (11421), an upper pressure relief channel (1143) is provided inside each of the two longitudinal beams (114), the second groove wall (11422) is provided with a first through hole (1144), a side of each of the two longitudinal beams (114) close to the corresponding one of the two first side walls is provided with a second through hole (1145), and the first through hole (1144) and the second through hole (1145) are in communication with the upper pressure relief channel (1143), respectively; and a side plate (1122) of the box (112) is provided with an upper pressure relief valve mounting hole (11221) in communication with the second through hole (1145).

4. The battery box of claim 1, **characterized in that** a side of the diaphragm (1131) close to the box cover (111) is provided with a support strip (115), an axis of the support strip (115) is parallel to the diaphragm (1131), and a side of the support strip (115) close to the box cover (111) is configured to abut against the upper battery module (012).

5. The battery box of any one of claims 1 to 4, **characterized in that** each of the two first side walls is convexly provided with a first support beam (1125), and an end of the first support beam (1125) close to the box cover (111) abuts against corresponding one of the two longitudinal beams (114).

6. The battery box of any one of claims 1 to 4, **characterized in that** the mounting cavity further comprises two second side walls disposed oppositely, and the two first side walls, the two second side walls, and a surface of the box cover (111) facing the box (112) define the mounting cavity; and the battery box further comprises two cross beams (116) disposed on the two second side walls, respectively, and another two ends of the diaphragm (1131) are lapped with the two cross beams (116), respectively.

7. The battery box of claim 6, **characterized in that** the battery box further comprises two stiffening beams (117), each of the two stiffening beams (117) is disposed between each of the two cross beams (116) and corresponding one of the two second side walls, and both ends of each of the two stiffening beams (117) are connected to corresponding one of the two cross beams (116) and corresponding one of the two second side walls, respectively.

8. The battery box of claim 6, **characterized in that** the battery box further comprises an intermediate beam (118), an axis of the intermediate beam (118) is parallel to an axis of one of the two cross beams (116), the intermediate beam (118) is located between the two cross beams (116), and both ends of the intermediate beam (118) are connected to the two first side walls, respectively.

9. The battery box of any one of claims 1 to 4, **characterized in that** a side of each of the two first side walls facing away from the box cover (111) is provided with a second support beam (1126), and a side of the second support beam (1126) close to the box cover (111) is configured to abut against a lower battery module.

10. The battery box of claim 9, **characterized in that** a lower pressure relief channel (11263) is provided inside the second support beam (1126), a side of the second support beam (1126) facing away from corresponding one of the two first side walls is provided with a third through hole (11261), a side of the second support beam (1126) close to the corresponding one of the two first side walls is provided with a fourth through hole (11262), and the third through hole (11261) and the fourth through hole (11262) are in communication with the lower pressure relief channel (11263), respectively; and a side plate (1122) of the box (112) is provided with a lower pressure relief valve mounting hole (11222), and the lower pressure relief valve mounting hole (11222) is in communication with the fourth through hole (11262).

11. The battery box of any one of claims 1 to 4, **characterized in that** a side of each of the two longitudinal beams (114) close to the box cover (111) is provided with a longitudinal beam bracket, one side of the longitudinal beam bracket is connected to corresponding one of the two longitudinal beams (114), and another side of the longitudinal beam bracket is connected to corresponding one of the two first side walls.

12. A battery pack, **characterized in that** the battery pack comprises:
the battery box of any one of claims 1 to 11;
an upper battery module (012) disposed in the upper module mounting cavity (1124); and
a lower battery module disposed in the lower module mounting cavity (1123).
